# EUROPEAN PATENT APPLICATION

(11) **EP 4 502 199 A1**
(43) Date of publication of application: **05.02.2025**
(21) Application number: 23780916.5
(22) Date of filing: 30.03.2023
(51) Int. Cl.: C22B 23/02, C22B 1/02, C22B 3/04, C22B 3/08, C22B 3/22, C22B 3/44, C22B 7/00, H01M 10/54

(54) **METHOD FOR SEPARATING COBALT AND NICKEL**

(30) Priority: 31.03.2022 JP 2022060241
(71) Applicant: Mitsubishi Materials Corporation, Tokyo 100-8117 (JP)
(72) Inventor: MIYAZAKI Atsushi, Iwaki-shi, Fukushima 971-8101 (JP); MURAOKA Hiroki, Iwaki-shi, Fukushima 971-8101 (JP)
(74) Representative: Gille Hrabal Partnerschaftsgesellschaft mbB Patentanwälte
(86) International application number: PCT/JP2023/013265
(87) International publication number: WO 2023/190908

(57) **Abstract**

This method for separating cobalt and nickel includes a step (S3) of immersing an electrode material of a lithium ion secondary battery in a treatment liquid containing sulfuric acid and hydrogen peroxide to obtain a leachate, a step (S4) of adding a hydrogen sulfide compound to the leachate to precipitate copper, either one of a first treatment step (S5A) or a second treatment step (S5B), a step (S6) of obtaining a precipitate substance containing cobalt sulfide and nickel sulfide and a residual liquid containing lithium, and a re-dissolution step (S7) of dissolving cobalt and nickel in a suspension obtained by suspending the precipitate substance in distilled water or dilute sulfuric acid, in which, in the re-dissolution step (S7), the suspension is bubbled with an oxidizing gas containing oxygen using a fine-bubble generation apparatus.

## Description

### Technical Field

The present invention relates to a method for separating cobalt and nickel, which is capable of accurately separating and recovering cobalt and nickel contained in a lithium ion secondary battery from other metals.

The present application claims priority on Japanese Patent Application No. 2022-060241 filed on March 31, 2022, the content of which is incorporated herein by reference.

### Background Art

A lithium ion secondary battery has been used as a power source in a wide range of fields, from small power sources for various electronic devices and the like to large power sources for electric vehicles and the like. In a case where such a lithium ion secondary battery is discarded, it is required to recover and reuse useful metals.

The lithium ion secondary battery is formed by fractionating an anode material and a cathode material with a separator such as porous polypropylene, stacking these members in a layer shape, and enclosing these members together with an electrolyte such as lithium hexafluorophosphate (LiPF₆) and an electrolytic solution in a case made of aluminum, stainless steel, or the like.

The anode material of the lithium ion secondary battery is formed by applying an anode active material such as graphite, which has been mixed with a binder, onto an anode current collector consisting of a copper foil or the like. In addition, the cathode material is formed by applying a cathode active material such as lithium manganate, lithium cobalt oxide, and lithium nickel oxide, which has been mixed with a binder, onto a cathode current collector consisting of an aluminum foil or the like.

Such a cathode active material of the lithium ion secondary battery contains a large amount of cobalt and nickel, but a cathode active material, which has been crushed and separated in advance in recycling process, contains manganese, copper, aluminum, lithium, and the like, in addition to cobalt and nickel. Therefore, in order to separate and recover cobalt and nickel from the lithium ion secondary battery with a high yield, it is necessary to accurately remove metals other than these metals.

In the related art, as a method for separating and recovering cobalt and nickel contained in the lithium ion secondary battery, for example, Patent Documents 1 and 2 disclose a method of recovering valuable metals from a used lithium ion secondary battery. In the recovery method, a cathode active material is taken out from the lithium ion secondary battery, and subjected to acid leaching to obtain a leachate in which a metal is leached, and cobalt and the nickel are separated from the leachate by solvent extraction.

In Patent Documents 1 and 2, a precipitate substance (sulfide) containing cobalt and nickel is produced in the middle of the steps, and the precipitate substance is redissolved using sulfuric acid and hydrogen peroxide as an oxidizing agent to produce a solution containing cobalt and nickel. However, there is a problem that the hydrogen peroxide used as the oxidizing agent has a high cost as a chemical, and thus the cost of the entire step of recovering cobalt and nickel contained in the lithium ion secondary battery is increased.

On the other hand, Patent Document 3 discloses a sulfide leaching method. In the method, a sulfide slurry in which a temperature is set to be 80°C or higher and lower than 115°C is added to a sulfuric acid solution accommodated in a reaction container, and an oxygen-containing gas is further supplied into the reaction container. As a result, a sulfide containing cobalt or nickel is dissolved. According to this method, it is possible to dissolve the sulfide containing cobalt or nickel in sulfuric acid without using the expensive hydrogen peroxide.

### Citation List

### Patent Documents

Patent Document 1: Japanese Unexamined Patent Application, First Publication No. 2016-113672
Patent Document 2: Japanese Unexamined Patent Application, First Publication No. 2016-186118
Patent Document 3: Japanese Unexamined Patent Application, First Publication No. 2018-193588

### Summary of Invention

### Technical Problem

However, in the sulfide leaching method disclosed in Patent Document 3, a time-consuming step of heating the sulfide slurry to 80°C or higher and lower than 115°C using an autoclave is required. In addition, in a case where only an oxygen-containing gas is simply supplied to the reaction container, there is a problem that a reaction time required for oxidation is long and the sulfide cannot be efficiently leached.

The present invention has been made in consideration of the above-described circumstances, and an objective of the present invention is to provide a method for separating cobalt and nickel, which is capable of separating cobalt and nickel contained in a lithium ion secondary battery from other metals with high accuracy with a small number of steps, and recovering cobalt and nickel from the lithium ion secondary battery at a low cost.

### Solution to Problem

In order to achieve the above-described objectives, the method for separating cobalt and nickel according to one aspect of the present invention has the following requirements.
[1] A method for separating cobalt and nickel, in which cobalt and nickel are separated from a lithium ion secondary battery, the method including:
   a leaching step of immersing an electrode material of a lithium ion secondary battery in a treatment liquid containing sulfuric acid and hydrogen peroxide to obtain a leachate;
   a copper precipitating step of adding a hydrogen sulfide compound to the leachate and stirring a mixture to precipitate copper as copper sulfide;
   either one of a first treatment step which includes, in the following order, a first neutralizing process of adding an alkali metal hydroxide to a mixed solution containing the precipitate obtained in the copper precipitating step to adjust a pH and obtain a first neutralized solution, and a first filtering process of subjecting the first neutralized solution to a solid-liquid separation to obtain a first eluate containing cobalt and nickel, and a residue containing the copper sulfide, or
   a second treatment step which includes, in the following order, a second filtering process of subjecting a mixed solution containing a precipitate obtained in the copper precipitating step to a solid-liquid separation to obtain a second eluate containing cobalt and nickel, and a residue containing the copper sulfide, and a second neutralizing process of adding an alkali metal hydroxide to the second eluate to adjust a pH and obtain a second neutralized solution;
   a cobalt and nickel separating step of adding a hydrogen sulfide compound to the first eluate obtained in the first treatment step or to the second neutralized solution obtained in the second treatment step, stirring a mixture, and subjecting the mixture to a solid-liquid separation to obtain a precipitate substance containing cobalt sulfide and nickel sulfide, and a residual liquid containing lithium; and
   a re-dissolution step of obtaining a suspension by suspending the precipitate substance separated in the cobalt and nickel separating step in dilute sulfuric acid, and dissolving the cobalt and the nickel contained in the precipitate substance in the suspension to obtain a cobalt and nickel solution containing the cobalt and the nickel,
   in which the re-dissolution step is a step of performing bubbling of the suspension with an oxidizing gas containing oxygen using a fine-bubble generation apparatus.

According to the aspect of the present invention, when the precipitate substance containing cobalt sulfide and nickel sulfide is reacted with the re-dissolution liquid containing sulfuric acid, bubbling is performed with an oxidizing gas. Thereby, a used amount of an oxidizing agent such as expensive hydrogen peroxide can be reduced, and the precipitate substance can be re-dissolved in sulfuric acid at a low cost. As a result, it is possible to result cobalt and nickel from a lithium ion secondary battery at a low cost.

[2] The method for separating cobalt and nickel according to [1],
   in which a pH of the suspension is set to be in a range of 2.0 or more and 7.0 or less.
[3] The method for separating cobalt and nickel according to [1] or [2],
   in which the bubbling in the re-dissolution step is performed for 50 minutes or longer and 12000 minutes or shorter at a flow rate of the oxidizing gas of 0.1 L/min or more and 5 L/min or less with respect to 1000 mL of the suspension.
[4] The method for separating cobalt and nickel according to any one of [1] to [3],
   in which an oxygen concentration of the oxidizing gas used in the re-dissolution step is 20% by volume or more.
[5] The method for separating cobalt and nickel according to any one of [1] to [4],
   in which a pH of the suspension during the bubbling in the re-dissolution step is in a range of 3.0 or more and 7.0 or less.
[6] The method for separating cobalt and nickel according to any one of [1] to [5],
   in which, in the re-dissolution step, hydrogen peroxide is added to the suspension.
[7] The method for separating cobalt and nickel according to any one of [1] to [6],
   in which the first treatment step is performed as a subsequent step of the copper precipitating step.
[8] The method for separating cobalt and nickel according to any one of [1] to [7], further including, as a pre-step of the leaching step:
   a crushing and sorting step of crushing and classifying the lithium ion secondary battery to obtain the electrode material containing at least cobalt, nickel, copper, and lithium.
[9] The method for separating cobalt and nickel according to any one of [1] to [8], further including:
   a solvent extracting step of adding an extractant solution to the cobalt and nickel solution to obtain a cobalt extract and a nickel extract.
[10] The method for separating cobalt and nickel according to any one of [1] to [9], further including, as a pre-step of the crushing and sorting step:
   a heat treatment step of heating the lithium ion secondary battery to carry out a heat treatment.

### Advantageous Effects of Invention

According to the aspect of the present invention, it is possible to provide a method for separating cobalt and nickel, in which it is possible to separate cobalt and nickel contained in a lithium ion secondary battery from other metals with simple process and high accuracy, and it is possible to recover cobalt and nickel from the lithium ion secondary battery at a low cost.

### Brief Description of Drawings

[FIG. 1] a flowchart representing a method for recycling an electrode material of a lithium ion secondary battery, which includes a method for separating cobalt and nickel according to a first embodiment of the present invention, in a stepwise manner.
[FIG. 2] a flowchart representing a method for recycling an electrode material of a lithium ion secondary battery, which includes a method for separating cobalt and nickel according to a second embodiment of the present invention, in a stepwise manner.
[FIG. 3] a graph representing a change in leaching rate of cobalt and nickel with a passage of bubbling time in a re-dissolution step in Example (1) of the present invention.
[FIG. 4] a graph representing a change in leaching rate of cobalt and nickel with a passage of bubbling time in a re-dissolution step and with a passage of reaction time after addition of hydrogen peroxide in Example (2) of the present invention.

### Description of Embodiments

Hereinafter, the method for separating cobalt and nickel according to embodiments of the present invention will be described with reference to the drawing. Each embodiment to be described below is specifically described for better understanding of the features of the invention, and does not limit the present invention unless otherwise specified.

### (First embodiment)

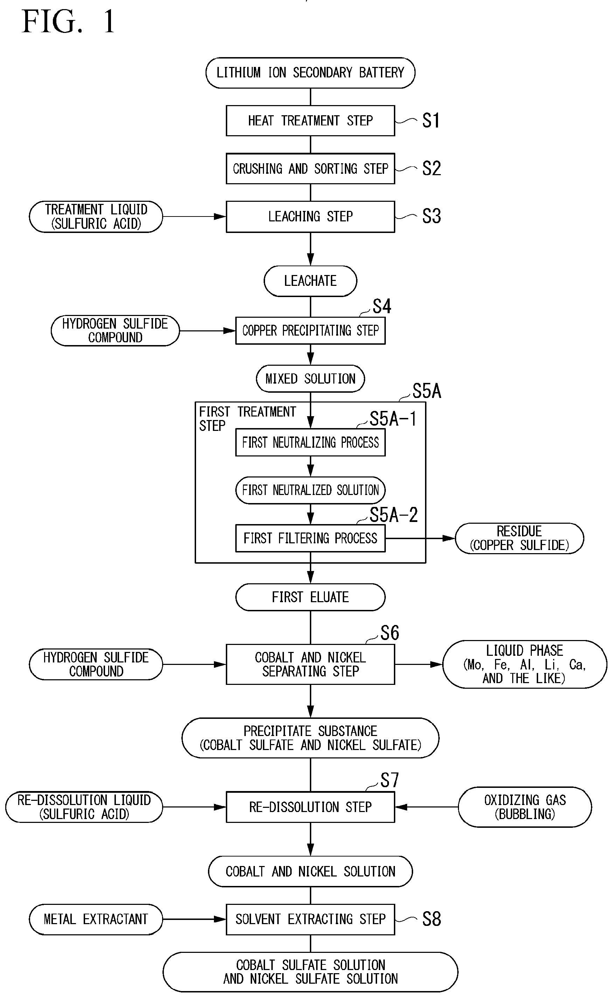

FIG. 1 is a flowchart representing a method for recycling an electrode material of a lithium ion secondary battery, which includes a method for separating cobalt and nickel according to a first embodiment of the present invention, in a stepwise manner.

### (Heat treatment step S1)

As a pre-treatment step of separating an electrode material constituting a discarded lithium ion secondary battery (hereinafter, referred to as a discarded LIB), the discarded LIB is subjected to a heat treatment in a heating furnace by being heated to approximately 500°C using superheated steam.

The heat treatment may be performed in a vacuum or at normal pressure, but heating in an inert atmosphere not containing oxygen is preferable. Due to the presence of a binder and an electrolytic solution, the discarded LIB has a strong adhesive force between a cathode active material or anode active material and an aluminum foil or copper foil which is a current collector. Therefore, in a case of carrying out the heat treatment step at a temperature of 400°C or higher, separation between the active material and the current collector is facilitated. In a case of setting the heating temperature of the discarded LIB to be 650°C or lower, it is possible to prevent difficulty in taking out only the active material, which is caused by aluminum being melted and then cooled and solidified while entangling the active material.

### (Crushing and sorting step S2)

Next, the discarded LIB after the heat treatment is crushed, and then the electrode material is sorted and separated by sieving. The discarded LIB is crushed using, for example, a twin-shaft shear crusher or a hammer mill.

Then, the crushed discarded LIB is classified using a sieve having a suitable mesh size; and a battery container, an aluminum foil, a copper foil, and a nickel terminal are recovered as an upper-side product of the sieve, and the electrode material containing the cathode active material (LiCoO₂ or the like) and the anode active material (graphite) are recovered as a lower-side product of the sieve. It is sufficient that such an electrode material has passed through a sieve having, for example, a mesh size of approximately 0.5 mm.

The separated electrode material mainly contains cobalt, nickel, manganese, copper, iron, aluminum, lithium, calcium, and the like, which are constitutional materials or impurities of the cathode active material, and contains carbon which is a constitutional material of the anode active material.

### (Leaching step S3)

Next, the electrode material separated in the crushing and sorting step S2 is immersed in a treatment liquid to obtain a leachate. As the treatment liquid, a mixture of sulfuric acid (H₂SO₄) and hydrogen peroxide (H₂O₂) is used.

Co and Ni contained in the discarded LIB include those in trivalent and tetravalent states, which are hardly dissolved in sulfuric acid, and thus in a case of using hydrogen peroxide as a reducing agent, Co and Ni can be reduced to divalent Co and Ni, which are more easily dissolved in sulfuric acid.

Examples of the treatment liquid include a treatment liquid obtained by mixing 5 ml or more of hydrogen peroxide water having a concentration of 30 wt% and 100 ml of a dilute sulfuric acid solution having a concentration of 2 mol/L or more. By setting the concentration of the dilute sulfuric acid solution to be 2 mol/L or more and setting the addition amount of the hydrogen peroxide water to be 5 ml or more, the leaching rate of cobalt and nickel can be increased. Although there is no particular limitation, the leaching rate cannot be expected to be further increased even in a case where the conditions are further increased, and thus the upper limit of the concentration of the sulfuric acid solution is 18 mol/L and the upper limit of the addition amount of hydrogen peroxide water is 30 ml.

The treatment liquid may contain an antifoaming agent containing a saturated aliphatic alcohol (saturated linear alcohol) having 8 or less carbon atoms. By adding the antifoaming agent, foams generated by the reaction between the electrode material and the sulfuric acid can be defoamed. Therefore, the electrode material can be efficiently leached with acid in a short time without using an excessive amount of sulfuric acid.

As a specific example of the leaching step S3, for example, a powdery electrode material separated in the crushing and sorting step S2 is added to a treatment liquid heated to 60°C or higher, and immersed for 4 hours or more. At this time, it is preferable to further carry out stirring.

In a case of setting the temperature of the treatment liquid to be 60°C or higher and setting the leaching (immersing) time to be 4 hours or more, the leaching rate of cobalt and nickel can be increased. Although there is no particular limitation, the leaching rate cannot be expected to be further increased even in a case where the conditions are further increased, and thus the upper limit of the temperature of the treatment liquid is 90°C and the upper limit of the leaching time is 15 hours.

By such a leaching step S3, in the electrode material, metal components derived from the cathode active material (cobalt, nickel, manganese, copper, iron, aluminum, lithium, calcium, and the like) are dissolved in the treatment liquid, and carbon derived from the anode active material is not dissolved and remains as carbon residue.

### (Copper precipitating step S4)

Next, a hydrogen sulfide compound is added to the leachate obtained in the leaching step S3, and the mixture is stirred to obtain a mixed solution in which an eluate containing cobalt and nickel and a precipitate containing copper sulfide (CuS) are mixed.

In the present embodiment, the hydrogen sulfide compound means a compound which includes sulfur content and the sulfur content takes a form of H₂S, HS⁻, or S²⁻ in a case of being dissolved in water.

As the hydrogen sulfide compound used in the copper precipitating step S4, a water-soluble alkali metal hydrogen sulfide is an exemplary example, and an aqueous solution of sodium hydrogen sulfide (NaSH) is used in the present embodiment. As a specific example of the copper precipitating step S4, the leachate is diluted with ion exchange water, and then an aqueous solution of sodium hydrogen sulfide is added to the diluted leachate with stirring.

The addition of the aqueous solution of sodium hydrogen sulfide is performed, for example, until an oxidation/reduction potential (vs Ag/AgCl) is to be 0 mV or less. By adding the sodium hydrogen sulfide until the oxidation/reduction potential is to be 0 mV or less, it is possible to precipitate almost the entire amount of copper contained in the leachate.

It is preferable to maintain a pH of the leachate from the start to the end of the addition of hydrogen sulfide compound at 2.0 or less, and it is more preferable to maintain the pH at 1.0 or less. In a case where the pH of the leachate exceeds 2.0, there is a risk that sulfides of cobalt and nickel are generated, and thus a recovery rate of these metals to the eluate decreases.

In addition to the sodium hydrogen sulfide, the hydrogen sulfide compound may be, for example, sodium sulfide, sodium thiosulfate, or sodium dithionite.

By adding the hydrogen sulfide compound to the leachate, among the metal components dissolved in the leachate, copper and sulfur react with each other to generate copper sulfide (CuS), which is subsequently precipitated. On the other hand, metal components (cobalt, nickel, manganese, iron, aluminum, lithium, calcium, and the like) excluding the copper remain in the liquid phase, whereby an eluate containing cobalt and nickel is obtained.

### (First treatment step S5A)

Next, as a first treatment step S5A, a first neutralizing process S5A-1 and a first filtering process S5A-2 are performed in this order.

In the first neutralizing process S5A-1, the pH of the mixed solution containing the precipitate obtained in the copper precipitating step S4 is adjusted by adding an alkali metal hydroxide; and thereby, a first neutralized solution is obtained.

In the copper precipitating step S4 as the pre-step, the pH of the leachate is maintained at 2.0 or less from the start to the end of the addition of the hydrogen sulfide compound; and therefore, there is a risk that the hydrogen sulfide compound and cobalt and nickel may hardly react with each other in this state in the subsequent cobalt and nickel separating step S6, but the pH of the eluate decreases as the hydrogen sulfide compound is added. After the pH adjustment, in a case where the pH at the start of the addition of the hydrogen sulfide compound is less than 3.0, the pH excessively decrease before the addition of the hydrogen sulfide compound is completed; and as a result, it is necessary to adjust the pH again. Therefore, it is more efficient to adjust the pH to be 3.0 or more in the pre-step of the cobalt and nickel separating step S6.

In addition, it takes a long time to adjust the pH in a case where the pH is adjusted to be a value exceeding 4.0, but the addition of the hydrogen sulfide compound immediately decreases the pH to be 4.0 or less, which is inefficient. Therefore, a range of 3.0 to 4.0 is desirable as the pH adjustment range.

In addition, in the first neutralizing process S5A-1, by using sodium hydroxide (NaOH) to adjust the pH of the mixed solution containing the precipitate obtained in the copper precipitating step S5 to be approximately 3.0 to 4.0, aluminum contained in the mixed solution can be formed into aluminum hydroxide (Al(OH)₃) and precipitated.

In the first neutralizing process S5A-1, which is the pre-treatment for the pH adjustment of the cobalt and nickel separating step S6, as a pH adjustment liquid, the sodium hydroxide (NaOH) or potassium hydroxide (KOH) can be used, and an acid, for example, sulfuric acid can also be used as long as the pH exceeds 4.0. In the present embodiment, the pH of the eluate is adjusted to be in a range of 3.0 to 4.0, for example, 3.5.

Next, in the first filtering process S5A-2, the first neutralized solution obtained in the first neutralizing process S5A-1 is subjected to a solid-liquid separation to separate a first eluate containing cobalt and nickel and a residue containing the copper sulfide (CuS). As a result, a solid phase containing the carbon residue generated in the leaching step S3, the precipitate residue including the copper sulfide (CuS) generated in the copper precipitating step S4, and the aluminum hydroxide (Al(OH)₃) generated in the first neutralizing process S5A-1 is separated from the first eluate (liquid phase). The saturated aliphatic alcohol (saturated linear alcohol) having 8 or less carbon atoms, contained in the antifoaming agent used in the leaching step S3, migrates to the first eluate.

In the present embodiment, the carbon residue generated in the leaching step S3 is also filtered by the solid-liquid separation in the first filtering process S5A-2, but the carbon residue can also be separated in advance by performing a solid-liquid separation in the leaching step S3 before the first filtering process S5A-2.

The solid phase separated in the first filtering process S5A-2 may be repulped (purified by adding water to the solid phase to resuspend the solid phase and then dehydrating the solid phase), or may be treated as a waste by washing the cake.

### (Cobalt and nickel separating step S6)

Next, by adding a water-soluble hydrogen sulfide compound to the first eluate obtained in the first treatment step S5A, cobalt and nickel contained in the eluate are each formed into water-insoluble cobalt sulfide (CoS) and nickel sulfide (NiS) and precipitated.

As the hydrogen sulfide compound for sulfurizing cobalt and nickel, for example water-soluble alkali metal hydrogen sulfide is an exemplary example. The hydrogen sulfide compound may be the same as or different from the hydrogen sulfide compound used in the copper precipitating step S4. In the present embodiment, an aqueous solution of sodium hydrogen sulfide having a concentration of 250 g/L is used.

The addition of the aqueous solution of sodium hydrogen sulfide is performed, for example, until an oxidation/reduction potential (vs Ag/AgCl) is to be -400 mV or less. By adding the sodium hydrogen sulfide until the oxidation/reduction potential is to be - 400 mV or less, it is possible to precipitate almost the entire amount of cobalt and nickel contained in the eluate.

It is preferable that the pH of the leachate is maintained within a range of 2.0 to 5.0, preferably 2.0 to 3.5, from the start to the end of the addition of the hydrogen sulfide compound. In a case where the pH of the leachate is less than 2.0, a reaction between the sodium hydrogen sulfide and the sulfuric acid (NaSH + H₂SO₄ → H₂S + Na₂SO₄) occurs, and sulfidation of cobalt and nickel hardly proceeds because the sodium hydrogen sulfide is consumed. On the other hand, in a case where the pH of the leachate is more than 5.0, there is a risk that hydroxides of other metals are generated and thus the purity of the precipitate substance decreases. In addition, it is difficult to control the pH in the high range.

It is noted that the cobalt sulfide referred to herein may include cobalt sulfide compounds of various formulations, such as cobalt sulfide (II), cobalt disulfide (CoS₂), and nonacobalt octasulfide (Co₉S₈). Similarly, the nickel sulfide (NiS) may include nickel sulfide compounds of various formulations, such as nickel sulfide (II), nickel disulfide (NiS₂), trinickel tetrasulfide (Ni₃S₄), and trinickel disulfide (Ni₃S₂).

On the other hand, metal components (manganese, iron, aluminum, lithium, calcium, and the like) excluding cobalt and nickel remain in the liquid phase (residual liquid) after the addition of the hydrogen sulfide compound. Thereafter, the manganese, iron, aluminum, lithium, calcium, and the like, contained in the obtained liquid phase, can be separated and recovered by solvent extraction or the like by pH adjustment.

### (Re-dissolution step S7)

Next, the sulfide (precipitate substance) containing cobalt and nickel, obtained in the cobalt and nickel separating step S6, is added to and reacted with a re-dissolution liquid containing dilute sulfuric acid to obtain a cobalt and nickel solution containing cobalt and nickel.

In the re-dissolution step S7, for example, the precipitate substance is added to the re-dissolution liquid heated to 50°C to 60°C to obtain a suspension, and an oxidizing gas is blown into the suspension using a fine-bubble generation apparatus to bubble the suspension. In a case where the temperature of the suspension is lower than 50°C, an oxidation reaction is reduced, and in a case where the temperature of the suspension is higher than 60°C, thermal energy required for maintaining the temperature is excessively required. In addition, the pH of the suspension is preferably in a range of 2.0 or more and 7.0 or less, and more preferably in a range of 3.0 or more and 7.0 or less. The pH of the suspension can also be referred to as the pH of the suspension before the bubbling. In a case where the pH is less than 2.0, sulfur is hardly dissolved, and thus hard foams are formed by sulfur and the blown gas. In a case where the pH is more than 7.0, since the dissolved cobalt and nickel are hydroxidized to deprive hydroxide ions, it is necessary to add an alkali agent in order to maintain the pH more than 7.0, and the cost of chemical is higher than that of sulfuric acid.

An oxygen concentration of the oxidizing gas used during the bubbling is preferably 20% by volume or more. The oxidizing gas may be a gas containing oxygen, for example, air (oxygen concentration is approximately 20% by volume). In addition, an oxidizing gas having an oxygen concentration higher than that in air, for example, a gas having an oxygen concentration of 90% by volume or more, or pure oxygen can also be used as the oxidizing gas. In a case where air is used as the oxidizing gas, the bubbling of the suspension can be performed at a low cost. On the other hand, in a case where the oxidizing gas having an oxygen concentration of 90% by volume or more is used, a dissolution time of cobalt and nickel is shortened, and the re-dissolution step S7 can be efficiently performed.

Fine bubbles (microbubbles) used for the bubbling in the re-dissolution step S7 may be any of microbubble (bubble diameter of 1 µm or more and less than 100 µm) or ultrafine bubble (nanobubble; bubble diameter of less than 1 µm). Such fine bubbles can be generated by using an air shearing-type microbubble generation apparatus or a nanobubble generation apparatus.

In addition, in the bubbling, not only are the fine bubbles blown into the container filled with the suspension, but also the suspension is sucked from the container filled with the suspension by a pump or the like, and the fine bubbles are blown into the sucked suspension to reflux the suspension to the container, so that the sulfide (precipitate substance) containing cobalt and nickel can be oxidized more efficiently.

In a case where the suspension is subjected to the bubbling by blowing the oxidizing gas in the re-dissolution step S7, the cobalt sulfide (CoS) is dissolved in the suspension by reactions of the following formula (1), formula (2), and formula (3).

CoS + O₂ + H₂SO₄ → CoSO₄ + S + H₂O ... (1)

CoS + O₂ + H₂O → Co(OH)₂ + S + H₂O ... (2)

S + O₂ → SO₄²⁻ ... (3)

In addition, the nickel sulfide (NiS) is dissolved in the suspension by reactions of the following formula (4), formula (5), and formula (6).

NiS + O₂ + H₂SO₄ → NiSO₄ + S + H₂O ... (4)

NiS + O₂ + H₂O → Ni(OH)₂ + S + H₂O ... (5)

S + O₂ → SO₄²⁻ ... (6)

Immediately after the start of the bubbling of the suspension, since the suspension is acidic, the reaction of the formula (1) or the formula (4) proceeds, and thus the pH of the suspension increases. In a case where the suspension becomes neutral, the reaction of the formula (2) or the formula (5) occurs. As the bubbling is further continued, the cobalt sulfide or the nickel sulfide is reduced, so that the reaction of the formula (3) or the formula (6) is dominant, and the pH of the suspension is lowered.

The pH of the bubbling in the suspension is preferably in a range of 3.0 or more and 7.0 or less. In a case where the pH of the bubbling in the suspension is 3.0 or more, the reaction of the formula (3) or the formula (6) proceeds. In a case where the pH of the bubbling in the suspension is less than 3.0, sulfur is not converted into sulfuric acid and remains as sulfur, and bubbles (foams) are formed by the sulfur and the oxidizing gas blown thereinto by the bubbling. Since the foams are not easily broken, the suspension may include a large amount of droplets, which may hinder the work. In a case where the pH of the suspension during the bubbling is set to be 7.0 or less, the reaction of the formula (2) or the formula (5) can be suppressed. In a case where the pH of the suspension during the bubbling is more than 7.0, the reaction of the formula (2) or the formula (5) may occur, and the circulation device may be clogged with the produced hydroxide.

Conditions of such a bubbling in the re-dissolution step S7 may be, for example, that the bubbling is performed for 50 minutes or longer and 12000 minutes or shorter at a flow rate of the oxidizing gas having an oxygen concentration of 20% by volume or more of 0.1 L/min or more and 5 L/min or less, with respect to 1000 mL of the suspension containing 150 g of the precipitate substance (undried) containing the cobalt sulfide and the nickel sulfide. The bubbling time is preferably 60 minutes or longer and 3000 minutes or shorter.

In addition, in the conditions in which the oxidizing gas is supplied to 1000 mL of the suspension at a flow rate of 0.1 L/min or more and 5 L/min or less, in a case where the oxygen concentration of the oxidizing gas is 20% by volume, the bubbling time is preferably 250 minutes or longer and 12000 minutes or shorter. In a case where the oxygen concentration of the oxidizing gas is 100% by volume, the bubbling time is preferably 50 minutes or longer and 2500 minutes or shorter. In this way, it is preferable to adjust the bubbling time in consideration of the oxygen concentration of the oxidizing gas.

In a case where the bubbling time is shorter than 50 minutes, there is a concern that unreacted cobalt sulfide or unreacted nickel sulfide is present. In addition, in a case where the bubbling time is longer than 12000 minutes, unreacted cobalt sulfide or unreacted nickel sulfide disappears, so that there is a concern that the treatment time is unnecessarily extended.

In addition, in the re-dissolution step S7, a re-dissolution liquid obtained by further adding hydrogen peroxide in addition to the sulfuric acid can also be used. As the hydrogen peroxide, for example, hydrogen peroxide water having a concentration of 30% by mass or less can be used. It is preferable to add the hydrogen peroxide at a point in time when cobalt sulfide or nickel sulfide begins to be dissolved in the aqueous suspension containing sulfuric acid.

In this way, by adding the hydrogen peroxide to the suspension together with the bubbling with the oxidizing gas, a dissolution rate of cobalt sulfide or nickel sulfide can be increased, and the re-dissolution step S7 can be performed in a shorter time. On the other hand, in a case where the bubbling and the addition of hydrogen peroxide are used in combination, as compared with the re-dissolution step in the related art in which the bubbling is not performed, the used amount of the expensive hydrogen peroxide can be reduced, and the re-dissolution step S7 can be performed at a lower cost.

In the re-dissolution step S7 described above, cobalt sulfide and nickel sulfide are dissolved in the re-dissolution liquid. In addition, impurities which are not dissolved in the re-dissolution liquid, elemental sulfur generated in the cobalt and nickel separating step S6, and the like remain as the solid phase. Thereafter, the solid-liquid separation is performed using a filtering medium or the like to obtain a cobalt and nickel solution in which the purity of cobalt and nickel is increased (purified).

The cobalt and nickel solution thus obtained rarely contains other components (copper, iron, aluminum, lithium, calcium, and the like) of the electrode material, other than cobalt and nickel, and thus the cobalt and nickel solution is suitable as a high-purity recovered raw material of cobalt and nickel.

It is also preferable to remove impurities other than the cobalt sulfide and the nickel sulfide by repulping the precipitate substance, as a pre-step of the re-dissolution step S7.

In the first neutralizing process S5A-1, the procedure for removing aluminum before performing the solid-liquid separation has been described above. However, in a case where such a procedure is not carried out, the precipitate substance may contain an aluminum compound. In this case, the aluminum compound can be removed by repulping the precipitate substance.

### (Solvent extracting step S8)

Next, an extractant solution is added to the cobalt and nickel solution obtained in the re-dissolution step S7 to obtain a cobalt extract and a nickel extract.

As the extractant solution, it is possible to use a mixed solution obtained by mixing a metal extractant and a diluent. For example, it is possible to use a mixed solution obtained by mixing 20 vol% of 2-ethylhexyl 2-ethylhexyl phosphonate (PC88A: manufactured by DAIHACHI CHEMICAL INDUSTRY Co., Ltd.) and 80 vol% of kerosene (diluent).

Using the extractant solution described above, a cobalt sulfate (CoSO₄) solution and a nickel sulfate (NiSO₄) solution are separated and recovered from the cobalt and nickel solution using a mixer-settler.

Cobalt and nickel can be recovered from the discarded LIB at a high yield by the above-described steps. For example, in a case where the amounts of cobalt and nickel in the electrode material taken out from the discarded LIB are each 100%, cobalt and nickel can be recovered at a high yield of 95% or more by the method for separating cobalt and nickel according to the present embodiment.

### (Second embodiment)

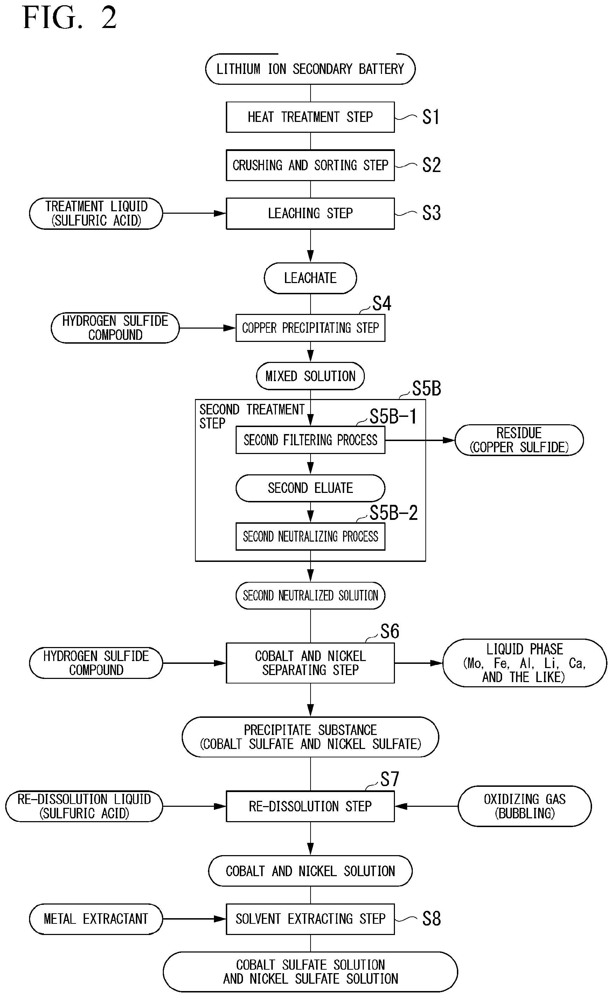

FIG. 2 is a flowchart representing a method for separating cobalt and nickel according to a second embodiment of the present invention in a stepwise manner.

In the second embodiment to be described below, the same steps as in the first embodiment will not be described.

In the second embodiment, a second treatment step S5B is performed between the copper precipitating step S4 and the cobalt and nickel separating step S6, instead of the first treatment step S5A.

In the second treatment step S5B, a second filtering process S5B-1 and a second neutralizing process S5B-2 are performed in this order.

In the second filtering process S5B-1, the mixed solution containing the precipitate, obtained in the copper precipitating step S4, is subjected to a solid-liquid separation to separate a second eluate containing cobalt and nickel and a residue containing the copper sulfide (CuS). As a result, a solid phase containing the carbon residue generated in the leaching step S3 and the precipitate residue including the copper sulfide (CuS) generated in the copper precipitating step S4 is separated from the second eluate (liquid phase).

The solid phase separated in the second filtering process S5B-1 may be repulped (purified by adding water to the solid phase to resuspend the solid phase and then dehydrating the solid phase), or may be treated as a waste by washing the cake.

In the second neutralizing process S5B-2, the pH of the second eluate obtained in the second filtering process S5B-1 is adjusted by adding an alkali metal hydroxide; and thereby, a second neutralized solution is obtained.

In the copper precipitating step S4 as the pre-step, the pH of the leachate is maintained at 2.0 or less from the start to the end of the addition of the hydrogen sulfide compound; and therefore, there is a risk that the hydrogen sulfide compound and cobalt and nickel may hardly react with each other in this state in the subsequent cobalt and nickel separating step S6, but the pH of the eluate decreases as the hydrogen sulfide compound is added. After the pH adjustment, in a case where the pH at the start of the addition of the hydrogen sulfide compound is less than 3.0, the pH excessively decrease before the addition of the hydrogen sulfide compound is completed; and as a result, it is necessary to adjust the pH again. Therefore, it is more efficient to adjust the pH to be 3.0 or more in the pre-step of the cobalt and nickel separating step S6.

In addition, it takes a long time to adjust the pH in a case where the pH is adjusted to be a value exceeding 4.0, but the addition of the hydrogen sulfide compound immediately decreases the pH to be 4.0 or less, which is inefficient. Therefore, a range of 3.0 to 4.0 is desirable as the pH adjustment range.

In addition, in the second neutralizing process S5B-2, by using sodium hydroxide (NaOH) to adjust the pH of the second eluate obtained in the second filtering process S5B-1 to be approximately 3.0 to 4.0, aluminum contained in the second eluate can be formed into aluminum hydroxide (Al(OH)₃) and precipitated.

In the second neutralizing process S5B-2, which is the pre-treatment for the pH adjustment of the cobalt and nickel separating step S6, as a pH adjustment liquid for adjusting the pH of the eluate having a pH of approximately 1.0 to be in a range of 3.0 to 4.0, the sodium hydroxide (NaOH) or potassium hydroxide (KOH) can be used, and an acid, for example, sulfuric acid can also be used as long as the pH exceeds 4.0. In the present embodiment, the pH of the second eluate is adjusted to be in a range of 3.0 to 4.0, for example, 3.5, using a sodium hydroxide aqueous solution having a concentration of 25 wt*%*.

Although a description was given of one embodiment of the present invention above, this embodiment is presented as an example and is not intended to limit the scope of the invention. It is possible to implement the embodiment in various other forms and to make various omissions, substitutions, and modifications in a range not departing from the technical features of the invention. The embodiment and variations thereof are included within the invention described in the scope of the claims and equivalents thereof as well as being included within the scope and the technical features of the invention. Examples

The effects of the method for separating cobalt and nickel according to the present embodiment were examined.

### (Procedure of Invention Example)

An electrode material taken out from a discarded LIB was added to a treatment liquid containing a sulfuric acid solution having a concentration of 2 mol/L and hydrogen peroxide water having a concentration of 30% by mass, and heated and stirred at a liquid temperature of 60°C for 4 hours (leaching step). Thereafter, the obtained leachate was cooled to room temperature, and a sodium hydrogen sulfide aqueous solution dissolved with stirring in ion exchange water to have a concentration of 250 g/L was added to the leachate while stirring until an oxidation-reduction potential (ORP) of the leachate was 0 mV (vs Ag/AgCl) or less (copper separating step).

At the stage, a solid-liquid separation was performed by filtering carbon of the anode material of the discarded LIB, which was insoluble in the sulfuric acid leaching, and the produced residue (copper sulfide). A sodium hydroxide solution having a concentration of 25*%* by mass was added to the obtained eluate to adjust the pH to be 3.5. A sodium hydrogen sulfide aqueous solution having a concentration of 250 g/L was added to the obtained neutralized solution while stirring until the ORP was -400 mV (vs Ag/AgCl) or less.

After confirming that black precipitate substance (cobalt sulfide and nickel sulfide) was sufficiently generated, a solid-liquid separation was performed to recover the precipitate substance (cobalt and nickel separating step). On the other hand, impurities such as manganese, aluminum, iron, lithium, and calcium remained in the residual liquid, and thus were disposed of as a metal-containing waste liquid.

2000 mL of distilled water was added to 254.7 g of the precipitate substance (undried) containing cobalt sulfide and nickel sulfide, the liquid temperature was set to 60°C, and sulfuric acid was added thereto so that the pH was 3.0; and thereby, a suspension was obtained. Then, using an air shearing-type microbubble generation apparatus, air (oxidizing gas) was supplied to the suspension at a rate of 3.0 L/min to generate microbubbles, so that the suspension was bubbled with the generated microbubbles (re-dissolution step). During the reaction, the pH of the suspension was gradually increased, but using sulfuric acid, the pH of the suspension was adjusted to be in a range of 3.0 or more and 7.0 or less.

Then, the supply of air was stopped after 4 hours from the start of bubbling, and the pH of the suspension was adjusted to be 3.0. Next, 40 mL of hydrogen peroxide water having a concentration of 30% by mass was added thereto, and stirred for 30 minutes to completely re-dissolve cobalt sulfide and nickel sulfide. The dissolved residue was 1.3 g (dried). The leaching rate of the cobalt sulfide and the nickel sulfide obtained in the pre-step was 98.4% by mass for the cobalt and 99.5% by mass for the nickel, and it was found that both nickel and cobalt could be sufficiently re-dissolved.

From the cobalt and nickel solution obtained in this way, a cobalt sulfate solution and a nickel sulfate solution were separated and recovered with a mixer-settler using an extractant solution obtained by mixing 20 vol% of PC88A (manufactured by DAIHACHI CHEMICAL INDUSTRY Co., Ltd.) as a metal extractant and 80 vol% of kerosene (solvent extracting step).

According to the above procedure of the present example, the amount of the obtained cobalt was 96.4% and the amount of the obtained nickel was 95.3% in terms of yield in the back extraction in a case where the amounts of cobalt and nickel in the electrode material taken out from the discarded LIB were 100%. Therefore, with the method for separating cobalt and nickel according to the present embodiment, it was found that cobalt and nickel could be recovered from the discarded LIB with a high yield.

The metal concentration was measured by ICP-AES, the pH was measured with a pH meter, and the ORP was measured with an ORP meter. The numerical value of % is based on mass.

In the re-dissolution step of the method for separating cobalt and nickel according to the present embodiment, in a case where the bubbling was performed in the suspension and in a case where the bubbling and the addition of hydrogen peroxide were performed, the leaching rate of cobalt and nickel was measured and calculated using the following expression. The residue after the re-dissolution was washed with distilled water, and a washing solution was collected. Leaching rate (%) = 100 × {(Liquid volume of leaching filtrate × Metal concentration) + (Liquid volume of washing solution × Metal concentration of washing solution) }/{ (Liquid volume of leaching filtrate × Metal concentration) + (Liquid volume of washing solution × Metal concentration of washing solution) + (Mass of residue × Metal content)}

### (1) Case of only bubbling (Invention Example (1))

Table 1 shows test results of re-dissolving the precipitate substance containing cobalt sulfide and nickel sulfide by bubbling only. "Time (min)" in the table indicates an elapsed time from the start of air blowing. In addition, in the table, "pH", "Temperature", "ORP", and "Air flow rate" indicate values at each point in time; "Cumulative addition amount" (sulfuric acid and NaOH) indicates the total addition amount at each point in time; and "Concentration" and "Migration rate" indicate values at each point in time. The migration rate was calculated using the following expression. Migration rate (%) = 100 × (Liquid volume × Metal concentration)/{ (Liquid volume after filtration × Metal concentration after filtration) + (Liquid volume of washing solution × Metal concentration of washing solution) + (Weight of residue × Metal content) }

In the expression, the numerical value of the numerator was a value at each point in time, and the numerical value of the denominator was a value at the end of the re-dissolution step.

2000 mL of distilled water was added to 282.9 g of the precipitate substance (undried) containing cobalt sulfide and nickel sulfide, and the mixture was stirred while being heated at a liquid temperature of 50°C (Example A1). Next, 15 mL of a sulfuric acid solution having a concentration of 47 wt% was added thereto so that the pH was 3.0 or less (Example A2). Next, after confirming a change over time from the start of air blowing, the air was blown in using an aspirator as a microbubble apparatus for 600 minutes while adding an appropriate amount of a sulfuric acid solution having a concentration of 47 wt% and a sodium hydroxide solution having a concentration of 25 wt% so that the pH was 3.0 to 7.0 (Examples A3 to A13).

A sulfur residue generated during the blowing was subjected to a solid-liquid separation by filtration to obtain 1910 mL of a leachate and 500 mL of a washing solution. Amounts of cobalt and nickel in 4.22 g of the sulfur residue are shown in Table 2, and cobalt and nickel concentrations of the washing solution are shown in Table 3. In a case where the total amounts of cobalt and nickel in the reaction system were set to 100%, the leaching rate was calculated to be 96.7% for the cobalt and 98.8% for the nickel.

The aspirator used as the bubbling apparatus was a product number 1-689-04 (manufactured by AS ONE Corporation). The aspirator was made of polytetrafluoroethylene (PTFE), and a liquid flow rate was set to 10 L/min.

**[Table 1]**

| Example | Time (min) | pH | Temperature (°C) | ORP (mV) | Air flow rate (L/min) | Cumulative addition amount (mL) | | Concentration (g/L) | | Migration rate (%) | |
|---|---|---|---|---|---|---|---|---|---|---|---|
| | | | | | | H₂SO₄ | NaOH | Ni | Co | Ni | Co |
| A1 | 0 | 9.08 | 47.5 | -245 | 0.0 | 0.0 | 0.0 | 0.0 | 0.0 | 0.7 | 0.7 |
| A2 | 0 | 2.35 | 50.9 | -113 | 0.0 | 15.0 | 0.0 | 1.3 | 1.0 | 20.8 | 12.7 |
| A3 | 30 | 3.74 | 54.4 | 271 | 4.0 | 27.0 | 0.0 | 3.9 | 2.8 | 60.4 | 35.1 |
| A4 | 65 | 4.92 | 53.2 | 197 | 4.0 | 29.0 | 0.0 | 4.5 | 3.6 | 69.8 | 45.4 |
| A5 | 120 | 3.80 | 54.4 | 258 | 4.0 | 32.0 | 0.0 | 5.2 | 4.8 | 81.4 | 59.9 |
| A6 | 185 | 4.31 | 53.2 | 238 | 4.0 | 33.5 | 0.0 | 5.7 | 5.7 | 89.2 | 71.9 |
| A7 | 240 | 6.58 | 51.0 | 148 | 4.0 | 33.5 | 0.0 | 5.9 | 6.3 | 91.5 | 79.1 |
| A8 | 305 | 4.77 | 54.9 | 220 | 4.0 | 35.5 | 0.5 | 6.0 | 6.7 | 93.9 | 84.6 |
| A9 | 360 | 5.98 | 54.7 | 164 | 4.0 | 35.7 | 0.5 | 6.2 | 7.1 | 96.3 | 89.5 |
| A10 | 420 | 4.52 | 53.4 | 235 | 4.0 | 36.1 | 0.5 | 6.4 | 7.6 | 100.1 | 95.3 |
| A11 | 450 | 4.23 | 54.1 | 215 | 4.0 | 36.1 | 0.5 | 6.5 | 7.8 | 101.9 | 97.6 |
| A12 | 540 | 3.81 | 54.0 | 273 | 4.0 | 36.1 | 0.7 | 6.4 | 7.6 | 99.4 | 95.0 |
| A13 | 600 | 3.66 | 55.0 | 275 | 4.0 | 36.1 | 0.7 | 6.3 | 7.7 | 98.9 | 96.7 |

**[Table 2]**

| Amount (wt%) | |
|---|---|
| Ni | Co |
| 3.49 | 12.1 |

**[Table 3]**

| Concentration (g/L) | |
|---|---|
| Ni | Co |
| 0.17 | 0.21 |

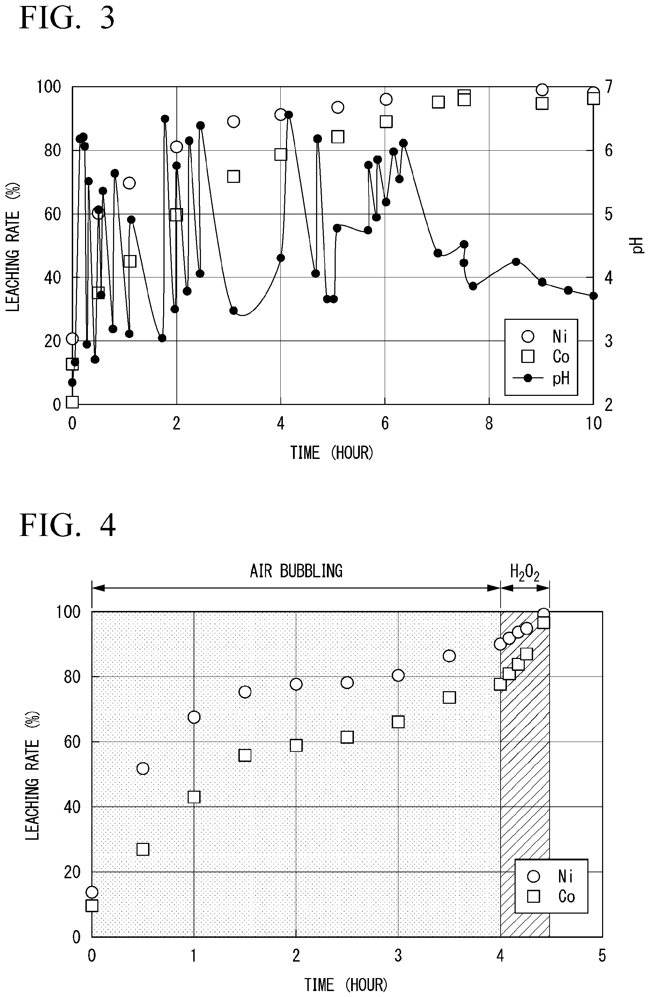

In Invention Example (1) shown in FIG. 3, the leaching rate of the nickel was more than 80% approximately 2 hours after the start of bubbling, and reached 98% approximately 9 hours later. The final leaching rate was 98.8%. In addition, the leaching rate of the cobalt was more than 80% approximately 4 hours after the start of bubbling, and reached 95% approximately 9 hours later. The final leaching rate was 96.7%. Therefore, under the above-described conditions of the suspension, it was found that, in a case where the bubbling was performed for approximately 10 hours, cobalt and nickel could be leached (re-dissolved) in substantially all amounts without adding hydrogen peroxide.

### (2) Case of bubbling and adding hydrogen peroxide (Invention Example (2))

Table 4 shows test results of re-dissolving the precipitate substance containing cobalt sulfide and nickel sulfide by bubbling and hydrogen peroxide. "Time (min)" in the table indicates an elapsed time from the start of air blowing. In addition, in the table, "pH", "Temperature", "ORP", and "Air flow rate" indicate values at each point in time; "Cumulative addition amount" (sulfuric acid, NaOH, and hydrogen peroxide) indicates the total addition amount at each point in time; and "Concentration" and "Migration rate" indicate values at each point in time. The migration rate was calculated using the following expression. Migration rate (%) = 100 × (Liquid volume × Metal concentration)/{ (Liquid volume after filtration × Metal concentration after filtration) + (Liquid volume of washing solution × Metal concentration of washing solution) + (Weight of residue × Metal content) }

In the expression, the numerical value of the numerator was a value at each point in time, and the numerical value of the denominator was a value at the end of the re-dissolution step.

2000 mL of distilled water was added to 254.7 g of the precipitate substance (undried) containing cobalt sulfide and nickel sulfide, and the mixture was stirred while being heated at a liquid temperature of 60°C (Example B1). Next, 9 mL of a sulfuric acid solution having a concentration of 47 wt% was added thereto so that the pH was 3.0 or less (Example B2). Next, after confirming a change over time from the start of air blowing, the air was blown in using an aspirator as a microbubble apparatus for 240 minutes while adding an appropriate amount of a sulfuric acid solution having a concentration of 47 wt% and a sodium hydroxide solution having a concentration of 25 wt% so that the pH was 3.0 to 7.0 (Examples B3 to B10).

Thereafter, the air blowing was stopped, 40 mL of hydrogen peroxide water having a concentration of 30 wt% was added thereto over 25 minutes, and the solution was dissolved (Examples B11 to B14). A sulfur residue generated during the blowing and the addition of hydrogen peroxide was subjected to a solid-liquid separation by filtration to obtain 2020 mL of a leachate and 400 mL of a washing solution. Amounts of cobalt and nickel in 1.30 g of the sulfur residue are shown in Table 5, and cobalt and nickel concentrations of the washing solution are shown in Table 6. In a case where the total amounts of cobalt and nickel in the reaction system were set to 100%, the leaching rate was calculated to be 98.4% for the cobalt and 99.5% for the nickel.

**[Table 4]**

| Example | Time (min) | pH | Temperature (°C) | ORP (mV) | Air flow rate (L/min) | Cumulative addition amount (mL) | | | Concentration (g/L) | | Migration rate (*%*) | |
|---|---|---|---|---|---|---|---|---|---|---|---|---|
| | | | | | | H₂SO₄ | NaOH | H₂O₂ | Ni | Co | Ni | Co |
| B1 | 0 | 8.17 | 60.0 | -286 | 0.0 | 0.0 | 0.0 | 0.0 | 0.00 | 0.00 | 0.5 | 0.5 |
| B2 | 0 | 3.31 | 63.3 | -170 | 0.0 | 9.0 | 0.0 | 0.0 | 0.92 | 0.80 | 13.9 | 9.9 |
| B3 | 30 | 3.40 | 63.2 | 240 | 3.0 | 25.0 | 0.0 | 0.0 | 3.55 | 2.27 | 52.2 | 27.1 |
| B4 | 60 | 3.69 | 62.4 | 237 | 3.0 | 28.5 | 0.0 | 0.0 | 4.63 | 3.64 | 67.9 | 43.2 |
| B5 | 90 | 3.72 | 60.3 | 256 | 3.0 | 30.5 | 0.0 | 0.0 | 5.18 | 4.75 | 75.8 | 56.2 |
| B6 | 120 | 3.37 | 60.8 | 289 | 3.0 | 30.5 | 0.0 | 0.0 | 5.32 | 5.02 | 77.9 | 59.4 |
| B7 | 150 | 4.11 | 61.7 | 239 | 3.0 | 30.5 | 2.0 | 0.0 | 5.37 | 5.22 | 78.7 | 61.7 |
| B8 | 180 | 4.81 | 61.7 | 210 | 3.0 | 30.9 | 2.0 | 0.0 | 5.53 | 5.63 | 80.9 | 66.5 |
| B9 | 210 | 4.22 | 60.0 | 238 | 3.0 | 31.4 | 2.0 | 0.0 | 5.92 | 6.26 | 86.6 | 74.0 |
| B10 | 240 | 3.59 | 60.9 | 274 | 3.0 | 31.5 | 2.0 | 0.0 | 6.18 | 6.62 | 90.5 | 78.2 |
| B11 | 245 | 3.45 | 63.9 | 344 | 0.0 | 31.5 | 2.0 | 5.0 | 6.32 | 6.90 | 92.5 | 81.5 |
| B12 | 250 | 3.34 | 64.2 | 353 | 0.0 | 31.5 | 2.0 | 10.0 | 6.43 | 7.14 | 94.0 | 84.3 |
| B13 | 255 | 3.31 | 64.1 | 359 | 0.0 | 31.5 | 2.0 | 20.0 | 6.50 | 7.40 | 95.2 | 87.3 |
| B14 | 265 | 3.46 | 66.0 | 338 | 0.0 | 31.5 | 2.0 | 40.0 | 6.77 | 8.21 | 99.1 | 96.9 |

**[Table 5]**

| Amount (wt%) | |
|---|---|
| Ni | Co |
| 5.81 | 21.8 |

**[Table 6]**

| Concentration (g/L) | |
|---|---|
| Ni | Co |
| 0.16 | 0.20 |

In Invention Example (2) shown in FIG. 4, the leaching rate of the nickel reached approximately 90% after approximately 4 hours after the start of bubbling. The leaching rate of the cobalt reached approximately 80% after approximately 4 hours after the start of bubbling. Thereafter, the final leaching rate of the nickel reached 99.5% by reacting with hydrogen peroxide. In addition, the final leaching rate of the cobalt reached 98.4%. Therefore, it was found that cobalt and nickel were almost all leached (re-dissolved) in approximately 4.5 hours by further adding the hydrogen peroxide, in addition to the bubbling, and it was found that the used amount of hydrogen peroxide was approximately 40 mL, which was a small amount, by performing the bubbling.

### (3) Case of not performing bubbling (Conventional Example)

Table 7 shows test results of re-dissolving the precipitate substance containing cobalt sulfide and nickel sulfide by hydrogen peroxide. "Time (min)" in the table indicates an elapsed time from the start of the addition of hydrogen peroxide. In addition, in the table, "pH", "Temperature", and "ORP" indicate values at each point in time; "Cumulative addition amount" (sulfuric acid, hydrogen peroxide, and NaOH) indicates the total addition amount at each point in time; and "Concentration" and "Migration rate" indicate values at each point in time. The migration rate was calculated using the following expression. Migration rate (%) = 100 × (Liquid volume × Metal concentration)/{ (Liquid volume after filtration × Metal concentration after filtration) + (Liquid volume of washing solution × Metal concentration of washing solution) + (Weight of residue × Metal content) }

In the expression, the numerical value of the numerator was a value at each point in time, and the numerical value of the denominator was a value at the end of the re-dissolution step.

1000 mL of distilled water was added to 169.7 g of the precipitate substance (undried) containing cobalt sulfide and nickel sulfide, and the mixture was stirred while being heated at a liquid temperature of 60°C (C1). Next, 14 mL of a sulfuric acid solution having a concentration of 47 wt% was added thereto so that the pH was 2.0 or less (C2). After confirming a change over time from the start of addition of hydrogen peroxide, hydrogen peroxide water having a concentration of 30 wt% was added thereto over 140 minutes while appropriately adding a sulfuric acid solution having a concentration of 47 wt% such that the pH was 2.0 or less (C3 to C9).

Thereafter, a sodium hydroxide solution having a concentration of 25 wt% or a sulfuric acid solution having a concentration of 47 wt% was added thereto to adjust the pH to be around 5.0 (C10 and C11). Next, a generated sulfur residue was subjected to a solid-liquid separation by filtration to obtain 1260 mL of a leachate and 355 mL of a washing solution. Amounts of cobalt and nickel in 4.26 g of the sulfur residue are shown in Table 8, and cobalt and nickel concentrations of the washing solution are shown in Table 9. In a case where the total amounts of cobalt and nickel in the reaction system were set to 100%, the leaching rate was calculated to be 99.4% for the cobalt and 99.6% for the nickel. It was found that the leaching was sufficient, and a large amount of hydrogen peroxide was required as compared with Examples, whereby the treatment cost was increased.

**[Table 7]**

| Conventional Example | Time (min) | pH | Temperature (°C) | ORP (mV) | Cumulative addition amount (mL) | | | Concentration (g/L) | | Migration rate (%) | |
|---|---|---|---|---|---|---|---|---|---|---|---|
| | | | | | H₂SO₄ | H₂O₂ | NaOH | Ni | Co | Ni | Co |
| C1 | 0 | 6.84 | 62.1 | -299 | 0.0 | 0 | 0 | 0.18 | 0.22 | 1.9 | 2.2 |
| C2 | 0 | 1.51 | 61.9 | -280 | 14.0 | 0 | 0 | 0.87 | 0.68 | 9.3 | 6.7 |
| C3 | 8 | 1.60 | 70.3 | 53 | 26.0 | 20 | 0 | 3.97 | 1.96 | 44.1 | 19.9 |
| C4 | 16 | 1.37 | 72.9 | 119 | 38.0 | 50 | 0 | 5.11 | 3.07 | 59.0 | 32.4 |
| C5 | 34 | 1.41 | 74.4 | 251 | 44.0 | 100 | 0 | 6.72 | 5.47 | 81.5 | 60.7 |
| C6 | 55 | 1.40 | 66.3 | 348 | 44.0 | 125 | 0 | 7.22 | 6.72 | 89.4 | 76.2 |
| C7 | 80 | 1.39 | 60.7 | 567 | 44.0 | 150 | 0 | 7.50 | 7.67 | 95.0 | 88.8 |
| C8 | 100 | 1.36 | 55.2 | 558 | 44.0 | 175 | 0 | 7.53 | 7.95 | 97.3 | 93.9 |
| C9 | 140 | 1.32 | 46.4 | 558 | 44.0 | 200 | 0 | 7.55 | 8.14 | 99.5 | 98.2 |
| C10 | 170 | 1.98 | 42.6 | 526 | 44.0 | 200 | 50 | 7.36 | 7.97 | 101.0 | 100.0 |
| C11 | 250 | 5.36 | 31.3 | 362 | 44.5 | 200 | 70 | 7.37 | 8.04 | 102.7 | 102.5 |

**[Table 8]**

| Amount (wt%) | |
|---|---|
| Ni | Co |
| 0.98 | 1.39 |

**[Table 9]**

| Concentration (g/L) | |
|---|---|
| Ni | Co |
| 0.31 | 0.33 |

### Industrial Applicability

With the method for separating cobalt and nickel according to the present embodiment, it is possible to separate and recover particularly cobalt and nickel, among valuable metals contained in a used lithium ion secondary battery, from other metals accurately, whereby a recycled resource having high purity can be efficiently obtained from a lithium ion secondary battery. Therefore, the method for separating cobalt and nickel according to the present embodiment has industrial availability.

## Claims

1. A method for separating cobalt and nickel, in which cobalt and nickel are separated from a lithium ion secondary battery, the method comprising:
a leaching step of immersing an electrode material of a lithium ion secondary battery in a treatment liquid containing sulfuric acid and hydrogen peroxide to obtain a leachate;
a copper precipitating step of adding a hydrogen sulfide compound to the leachate and stirring a mixture to precipitate copper as copper sulfide;
either one of a first treatment step which includes, in the following order, a first neutralizing process of adding an alkali metal hydroxide to a mixed solution containing the precipitate obtained in the copper precipitating step to adjust a pH and obtain a first neutralized solution, and a first filtering process of subjecting the first neutralized solution to a solid-liquid separation to obtain a first eluate containing cobalt and nickel, and a residue containing the copper sulfide, or
a second treatment step which includes, in the following order, a second filtering process of subjecting a mixed solution containing a precipitate obtained in the copper precipitating step to a solid-liquid separation to obtain a second eluate containing cobalt and nickel, and a residue containing the copper sulfide, and a second neutralizing process of adding an alkali metal hydroxide to the second eluate to adjust a pH and obtain a second neutralized solution;
a cobalt and nickel separating step of adding a hydrogen sulfide compound to the first eluate obtained in the first treatment step or to the second neutralized solution obtained in the second treatment step, stirring a mixture, and subjecting the mixture to a solid-liquid separation to obtain a precipitate substance containing cobalt sulfide and nickel sulfide, and a residual liquid containing lithium; and
a re-dissolution step of obtaining a suspension by suspending the precipitate substance separated in the cobalt and nickel separating step in dilute sulfuric acid, and dissolving the cobalt and the nickel contained in the precipitate substance in the suspension to obtain a cobalt and nickel solution containing the cobalt and the nickel,
wherein the re-dissolution step is a step of performing bubbling of the suspension with an oxidizing gas containing oxygen using a fine-bubble generation apparatus.

2. The method for separating cobalt and nickel according to Claim 1,
wherein a pH of the suspension is set to be in a range of 2.0 or more and 7.0 or less.

3. The method for separating cobalt and nickel according to Claim 1 or 2,
wherein the bubbling in the re-dissolution step is performed for 50 minutes or longer and 12000 minutes or shorter at a flow rate of the oxidizing gas of 0.1 L/min or more and 5 L/min or less with respect to 1000 mL of the suspension.

4. The method for separating cobalt and nickel according to Claim 1 or 2,
wherein an oxygen concentration of the oxidizing gas used in the re-dissolution step is 20% by volume or more.

5. The method for separating cobalt and nickel according to Claim 1 or 2,
wherein a pH of the suspension during the bubbling in the re-dissolution step is in a range of 3.0 or more and 7.0 or less.

6. The method for separating cobalt and nickel according to Claim 1 or 2,
wherein, in the re-dissolution step, hydrogen peroxide is added to the suspension.

7. The method for separating cobalt and nickel according to Claim 1 or 2,
wherein the first treatment step is performed as a subsequent step of the copper precipitating step.

8. The method for separating cobalt and nickel according to Claim 1 or 2, further comprising, as a pre-step of the leaching step:
a crushing and sorting step of crushing and classifying the lithium ion secondary battery to obtain the electrode material containing at least cobalt, nickel, copper, and lithium.

9. The method for separating cobalt and nickel according to Claim 1 or 2, further comprising:
a solvent extracting step of adding an extractant solution to the cobalt and nickel solution to obtain a cobalt extract and a nickel extract.

10. The method for separating cobalt and nickel according to Claim 1 or 2, further comprising, as a pre-step of the crushing and sorting step:
a heat treatment step of heating the lithium ion secondary battery to carry out a heat treatment.
